# FASCICULE DE BREVET EUROPEEN

(11) **EP 2 432 954 B1**
(45) Date de publication et mention de la délivrance du brevet: **01.05.2013**
(21) Numéro de dépôt: 10725972.3
(22) Date de dépôt: 20.05.2010
(51) Int. Cl.: E05B 7/00, E05B 65/20

(54) **POIGNEE D'UN OUVRANT DE VEHICULE AUTOMOBILE**
HANDGRIFF FÜR EIN TÜRBLATT EINES FAHRZEUGS
HANDLE FOR A DOOR LEAF OF AN AUTOMOBILE

(30) Priorité: 21.05.2009 IT MI20090896
(43) Date de publication de la demande: 28.03.2012
(73) Titulaire: Valeo S.p.A., 10026 Santena (TO) (IT)
(72) Inventeur: FIORENZO, Savant, 94042 Creteil Cedex (FR); LESUEUR, Guillaume, 94042 Creteil Cedex (FR)
(74) Mandataire: Larger, Solène
(86) Numéro de dépôt international: PCT/EP2010/003115
(87) Numéro de publication internationale: WO 2010/133372

(56) Documents cités:
- EP-A1- 1 593 802
- EP-A1- 2 053 186
- DE-A1-102005 049 144

## Description

L'invention concerne une poignée d'ouvrant de véhicule automobile, en particulier une poignée d'une porte latérale.

Pour répondre aux diverses normes de sécurité, en particulier en cas de choc latéral, les poignées latérales de véhicule automobile connues actuellement sont équipées d'un système inertiel. Ce système inertiel se déclenche lors d'un choc latéral sur la porte et bloque le levier de préhension pour prévenir toute ouverture intempestive de la porte latérale qui pourrait causer une éjection du passager en dehors du véhicule.

Ces poignées connues comprennent un levier de préhension mobile en rotation par rapport à l'ouvrant entre une position de repos et une position de commande. Ce levier de préhension peut agir sur un levier de transmission qui va actionner, via une tringlerie ou des câbles Bowden l'ouverture d'une serrure de l'ouvrant.

Le système inertiel est composé de manière connue d'une masse inertielle et d'un ergot de blocage solidaire de cette masse inertielle, qui coopère avec un épaulement du levier de transmission pour bloquer ledit levier en cas de choc latéral dans une position où il ne peut pas agir pour ouvrir la serrure.

Dans les systèmes inertiels connus, la masse inertielle, en position active, bloque le levier de transmission soit de manière irréversible soit de manière réversible.

Le document D1 décrit une poignée d'un ouvrant de véhicule automobile selon le préambule de la revendication 1 comprenant deux masses inertielles 14, 32 montées de manière réversible.

Par exemple, l'inconvénient d'un système de sécurité de type irréversible, est qu'en cas de léger choc, c'est à dire à faible accélération, ou encore d'accidents au cours du montage, la poignée se retrouve complètement bloquée.

L'inconvénient d'un système de sécurité de type réversible, est qu'en cas de choc plus important ou de succession de chocs ou d'accélérations, est que la poignée puisse s'ouvrir de manière intempestive.

Pour pallier à ces inconvénients, certaines solutions connues proposent de calibrer le système inertiel pour de fortes accélérations, et d'utiliser un contrepoids au niveau du levier de transmission pour équilibrer le poids de la poignée, ce qui évite que la poignée soit complètement bloquée en cas de léger choc.

Toutefois, avec ces solutions augmentent considérablement la masse et l'encombrement global du support d'une poignée.

La présente invention vise à pallier ces inconvénients de l'art antérieur en proposant une poignée dont le système de sécurité inertiel est optimisé.

À cet effet, l'invention a pour objet une poignée d'un ouvrant de véhicule automobile comprenant :
- un levier de préhension mobile en rotation par rapport à l'ouvrant autour d'un premier axe de rotation entre une position de repos et une position de commande pour l'ouverture d'une serrure de l'ouvrant,
- un levier de transmission monté dans un socle 5 de la poignée fixé à l'ouvrant, le levier de transmission étant configuré pour être actionné par le levier de préhension et pivoter autour d'un second axe de rotation entre une position de repos et une position active dans laquelle le levier de transmission actionne l'ouverture de la serrure, et
- un système de sécurité monté dans le socle, configuré pour empêcher la rotation du levier de transmission en cas de choc,
caractérisée en ce que le système de sécurité comporte deux masses inertielles, montées pivotantes entre une position de repos et une position active empêchant la rotation du levier de transmission, dont une première desdites masses inertielles se bloque en position active de manière réversible et une seconde desdites masses inertielles se bloque en position active, de manière irréversible.

Ainsi, on permet d'empêcher toute ouverture intempestive de l'ouvrant en cas de choc à la fois pour les faibles accélérations et pour les fortes accélérations.

En outre, ce système de sécurité permet de bloquer de manière réversible le levier de transmission en cas de chocs à faibles accélérations grâce à la première masse inertielle, ce qui évite que la poignée soit totalement bloquée, tout en assurant un blocage irréversible directement ou indirectement du levier de transmission grâce à la seconde masse inertielle, en cas d'accélérations plus importantes.

Plus précisément ledit système de sécurité comporte un moyen de blocage- de la seconde masse inertielle en position active, pour bloquer en rotation le levier de transmission, ou tout autre élément de la cinématique d'ouverture dudit ouvrant, et ce de manière irréversible.

Avantageusement, la première masse inertielle comporte un ergot de blocage qui coopère avec un premier épaulement du levier de transmission, pour bloquer en rotation ce dernier en cas de choc.

Ladite seconde masse inertielle peut comporter un ergot de blocage qui coopère avec un second épaulement du levier de transmission pour bloquer directement en rotation le levier de transmission en cas de choc.

Alternativement, ladite seconde masse inertielle est configurée pour bloquer la première masse inertielle en position active. Plus précisément, la seconde masse inertielle est configurée pour bloquer le levier de transmission par l'intermédiaire du blocage de la première masse inertielle en position active.

De manière alternative, la seconde masse inertielle est configurée pour bloquer à la fois, et directement, le levier de transmission et la première masse inertielle en position active.

Pour ce faire, la seconde masse inertielle présente une ouverture pour recevoir une protubérance de la première masse inertielle en position active.

Favorablement, ledit moyen de blocage de la seconde masse inertielle comporte une lame souple coopérant avec une saillie de la seconde masse inertielle.

Selon un autre mode de réalisation, le moyen de blocage de la seconde masse inertielle comporte une cale de blocage de forme générale sensiblement parallélépipédique, disposée sur le socle en regard d'une extrémité de la seconde masse inertielle, de sorte que lorsque la seconde masse inertielle pivote, la seconde masse inertielle:
- coulisse le long d'une paroi longitudinale de la cale de blocage selon une première direction, puis
- coulisse le long d'une paroi latérale de la cale de blocage selon une deuxième direction sensiblement perpendiculaire à la première direction, ladite paroi latérale formant une butée bloquant la seconde masse inertielle en position active.

De manière avantageuse, ledit second axe de rotation est sensiblement perpendiculaire au premier axe de rotation. Alternativement, ledit second axe de rotation est sensiblement parallèle au premier axe de rotation.

D'autres caractéristiques et avantages de l'invention ressortiront de la description suivante, donnée à titre d'exemple, sans caractère limitatif, en regard des dessins annexés sur lesquels :
- la figure 1 représente une vue en perspective d'une poignée,
- la figure 2 représente une vue schématique de l'arrière de la poignée de la figure 1 selon un premier mode de réalisation,
- la figure 3 est une vue en détail de la liaison entre le levier de préhension et le levier de transmission de la poignée de la figure 1,
- la figure 4 est une variante de réalisation de la vue représentée sur la figure 2,
- la figure 5a est une vue en coupe de la figure 2 représentant le levier de transmission et une première masse inertielle en position de repos,
- la figure 5b est une vue en coupe de la figure 2 représentant le levier de transmission et une première masse inertielle en position intermédiaire,
- la figure 5c est une vue en coupe de la figure 2 représentant le levier de transmission et une première masse inertielle en position active,
- la figure 6a est une vue en coupe de la figure 2 représentant de façon schématique de deux masses inertielles en position de repos,
- la figure 6b est une vue en coupe de la figure 2 représentant de façon schématique une première masse inertielle en position active et une seconde masse inertielle en position de repos, lors d'un faible choc,
- la figure 6c est une vue en coupe de la figure 2 représentant de façon schématique de deux masses inertielles en position active, lors d'un choc important,
- la figure 7 représente une vue schématique de l'arrière de la poignée de la figure 1 selon un second mode de réalisation,
- la figure 8 représente une vue schématique de l'arrière de la poignée de la figure 1 selon un troisième mode de réalisation,
- la figure 9 est une vue en détail de la seconde masse inertielle en position de repos,
- la figure 10 est une vue en détail de la seconde masse inertielle bloquée en position active,
- la figure 11 est une variante de réalisation de la vue représentée sur la figure 8,
- la figure 12 représente une vue schématique de l'arrière de la poignée de la figure 1 selon un quatrième mode de réalisation,
- la figure 13 représente une vue schématique de l'arrière de la poignée de la figure 1 selon un cinquième mode de réalisation,
- la figure 14 est une vue en coupe de la figure 13 représentant la seconde masse inertielle et le levier de transmission,
- la figure 15 est une variante de réalisation de la vue représentée sur la figure 13, et
- la figure 16 représente une vue schématique de l'arrière de la poignée de la figure 1 selon un sixième mode de réalisation.

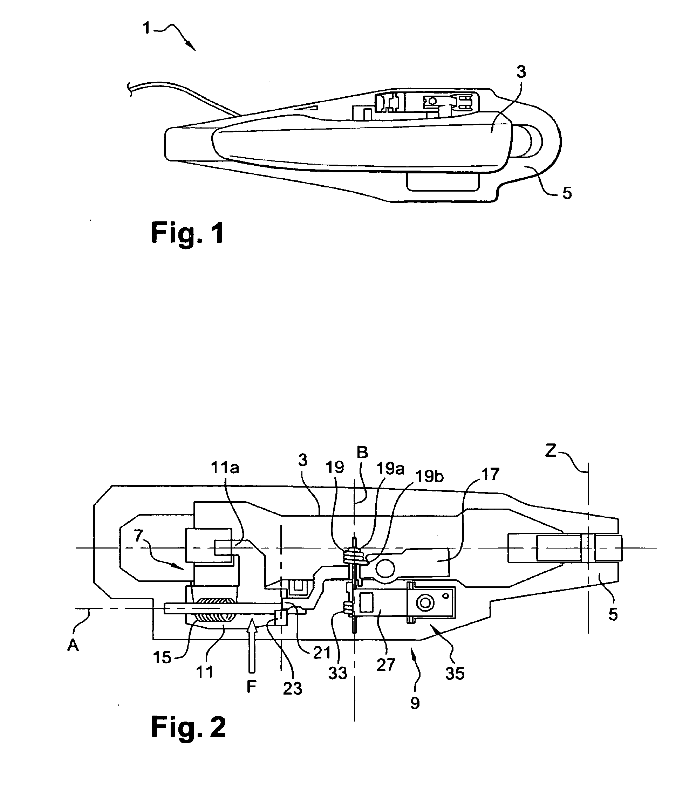

La figure 1 représente une vue en perspective d'une poignée 1 d'ouvrant d'un véhicule automobile, notamment d'une porte latérale.

La poignée 1 d'ouvrant comporte un levier de préhension 3 accessible depuis l'extérieur du véhicule et sur laquelle un utilisateur tire vers l'extérieur pour ouvrir la porte.

Ce levier 3 est relié à une partie fixe 5, également appelée socle ou support de poignée qui est destinée à être montée à l'intérieur de la porte, plus précisément derrière la face externe de la porte, et qui n'est donc pas visible une fois montée sur le véhicule.

La poignée 1 est ici une poignée de type "Frigo" et le levier de préhension 3 est mobile en rotation par rapport au socle 5.

Plus particulièrement, le levier de préhension 3 peut pivoter autour d'un premier axe de rotation Z entre une position de repos et une position de commande pour l'ouverture d'une serrure de l'ouvrant, lorsque l'utilisateur tire sur ce levier de préhension 3. Ce premier axe de rotation Z est sensiblement parallèle à l'axe de rotation de la porte.

Un premier mode de réalisation de ce socle 5 est représenté sur la figure 2. Le socle 5 comporte un mécanisme de transmission 7 pour relier le levier de préhension 3 au mécanisme d'ouverture de la porte et un système de sécurité inertiel 9 pour éviter toute ouverture intempestive de l'ouvrant en cas de choc.

Le mécanisme de transmission 7 comporte un levier de transmission 11 monté dans un logement du socle 5.

Le socle 5 est par exemple réalisé par injection dans un matériau plastique ou dans un métal coulé sous pression.

De plus, ce levier de transmission 11 est monté pivotant, autour d'un second axe de rotation A entre une position de repos et une position active dans laquelle le levier de transmission 11 actionne l'ouverture de la serrure.

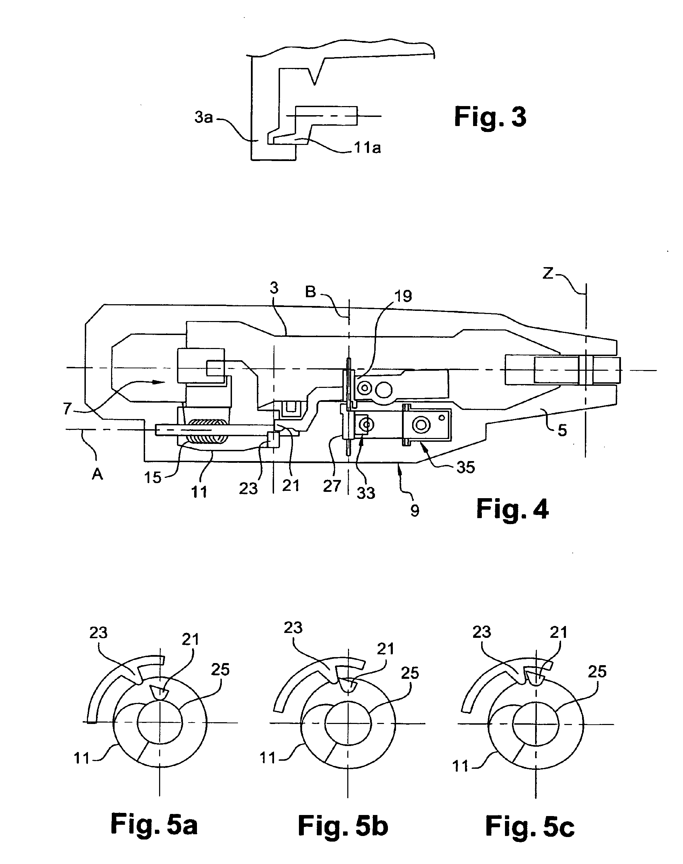

Afin de relier mécaniquement le levier de transmission 11 au levier de préhension 3, pour que le levier de transmission 11 tourne autour du second axe A dans le socle 5 lorsque le levier de préhension 3 est tiré par l'utilisateur, l'extrémité du levier de préhension 3 présente un appendice 3a (mieux visible sur la figure 3) qui s'étend dans le socle 5 formant une encoche dans laquelle est engagée en rotation une languette 11a du levier de transmission 11. La languette 11 a est par exemple venue de matière avec le levier de transmission 11.

Selon ce premier mode de réalisation, le second axe de rotation A est sensiblement perpendiculaire au premier axe de rotation Z de rotation du levier de préhension 3.

Un moyen de rappel, ici sous la forme d'un ressort hélicoïdal 15, est disposé coaxialement au second axe de rotation A du levier de transmission 11, pour ramener le levier de transmission 11 et le levier de préhension 3 en position de repos, lorsque l'utilisateur ne tire plus sur le levier de préhension 3.

Par ailleurs, le mécanisme de transmission 7 comporte également une poulie de transmission (non représentée). La poulie de transmission peut comprendre une rainure de guidage destinée à recevoir un câble d'actionnement (non représenté) relié au mécanisme de la porte, plus précisément à la serrure (non représentée). Ainsi, lorsque le levier de transmission 11 se déplace vers la position active, la poulie de transmission pivote autour du second axe de rotation A selon la direction illustrée par la flèche F, et le câble actionne l'ouverture de la serrure.

La poulie de transmission est solidaire du levier de transmission 11 et est par exemple disposée à l'extérieur du socle 5.

Par ailleurs, le système inertiel 9 comporte une première masse inertielle 17 articulée sur le socle 5 ou une partie solidaire de ce socle 5. Comme on le constate sur la figure 2, la première masse inertielle 17 s'étend selon un axe horizontal, ici l'axe longitudinal du levier de préhension 3.

La première masse inertielle 17 est montée pivotante, par rapport au socle 5, autour d'un troisième axe de rotation B entre une position de repos et une position active dans laquelle le levier de transmission 11 est bloqué en rotation.

Selon ce premier mode de réalisation, ce troisième axe de rotation B est sensiblement perpendiculaire au second axe A et sensiblement parallèle au premier axe de rotation Z.

En outre, un ressort de rappel 19, par exemple de type hélicoïdal, permet de rappeler en position de repos la première masse inertielle 17.

Le ressort hélicoïdal est ici centré sur le troisième axe de rotation B avec une extrémité 19a en contact avec un support du socle 5 et l'autre extrémité 19b en contact avec la première masse inertielle 17.

En variante, on peut prévoir un ressort de compression (voir figure 4).

En outre, la première masse inertielle 17 est conformée pour pivoter lorsqu'elle subit de faibles accélérations, par exemple de l'ordre de 15-20 G (1 G correspond à 9.80665 m.s-²).

La première masse inertielle 17 porte à une extrémité un ergot de blocage 21 qui coopère avec un épaulement 23 du levier de transmission 11 lors du pivotement de la première masse inertielle 17.

En se référant aux figures 5a à 5c, on remarque que le levier de transmission 11 présente une surface de came 25 adaptée pour coopérer avec l'ergot de blocage 21 de la première masse inertielle 17.

Lors d'une ouverture normale de la porte, le levier de transmission 11 est entraîné en rotation et l'ergot de blocage 21 coulisse sur la surface 25 sans que l'ergot de blocage 21 ne touche l'épaulement 23, la première masse inertielle 17 étant immobile en position de repos (figure 5a).

En revanche, dans le cas d'un choc, si le levier de préhension 3 subit une force qui tendrait à l'ouvrir, la première masse inertielle 17 sera également soumise à la même force, de sorte que la première masse inertielle 17 pivote, surmontant la force du ressort 19. Ceci entraîne que l'ergot de blocage 21 est déplacé (figure 5b) jusqu'à intercepter l'épaulement 23 et verrouiller le levier de transmission 11 au début de la rotation du levier de transmission 11 (figure 5c).

La première masse inertielle 17 n'est pas bloquée en position active et de ce fait le levier de transmission 11 est bloqué de manière réversible.

En se référant à nouveau à la figure 2, le système inertiel 9 comporte en outre une seconde masse inertielle 27 activée pour les fortes accélérations, par exemple de l'ordre 100G.

Selon ce premier mode de réalisation, la seconde masse inertielle 27 est montée à proximité de la première masse inertielle 17, pivotante par rapport au socle 5, autour d'un quatrième axe de rotation confondu avec le troisième axe de rotation B entre une position de repos et une position active dans laquelle la première masse inertielle 17 est bloquée en rotation.

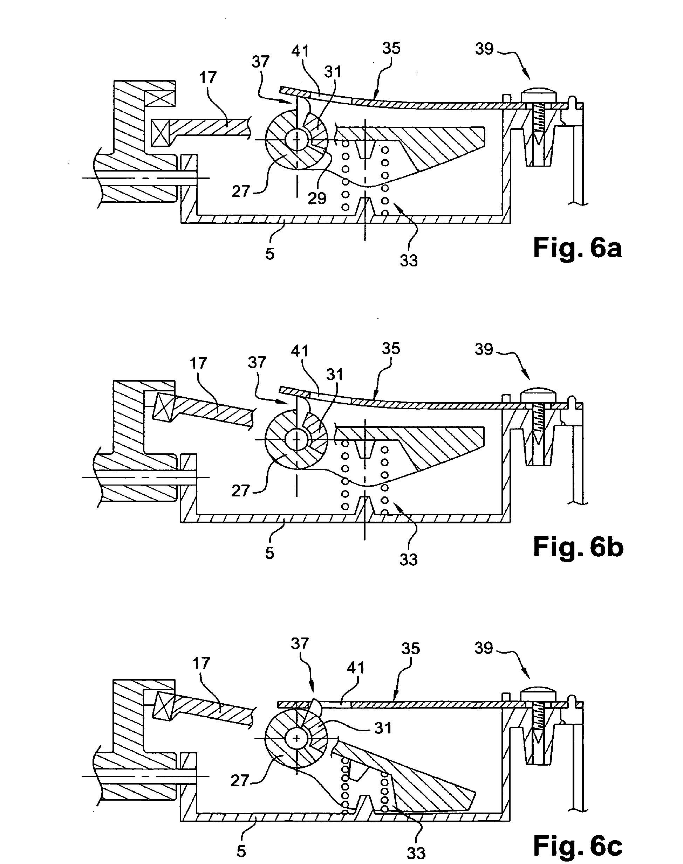

À cet effet, la seconde masse inertielle 27 présente une ouverture ou un secteur ouvert 29 dans laquelle s'engage une protubérance 31 de la première masse inertielle 17 en position active (voir figure 6).

En outre, un ressort de rappel 33, par exemple de type hélicoïdal, permet de rappeler en position de repos la seconde masse inertielle 27.

Le ressort hélicoïdal 33 est ici centré sur le troisième axe de rotation B avec une extrémité en contact avec un support du socle 5 et l'autre extrémité en contact avec la seconde masse inertielle 27.

En variante, on peut prévoir un ressort de compression (voir figure 4).

Comme illustré aux figures 6a à 6c, en cas de faible choc ou accélération, la première masse inertielle 17 pivote d'une position de repos (Cf. figure 6a) à une position active (Cf. figure 6b) entraînant la protubérance 31 de ladite première masse inertielle 17 à l'intérieur de l'ouverture 29 ménagée dans ladite seconde masse inertielle 27. Dans ce cas, la deuxième masse inertielle n'effectue aucun mouvement, et la première masse peut retourner à position de repos, de manière réversible.

En cas d'un choc plus violent (Cf. figure 6c), la première masse inertielle 17 et déjà en position active et la seconde masse inertielle 27 pivote, surmontant la force du ressort 33.

La rotation de la seconde masse inertielle 27, entraîne ainsi son ouverture 29 en vis-à-vis de la protubérance 31 de la première masse inertielle 17 qui s'engage totalement dans cette ouverture 29. De plus, du fait de la rotation de la seconde masse inertielle 27 en position active, la première masse inertielle 17 est ainsi bloquée et ne peut retourner à sa position de repos.

Plus précisément, le système inertiel 9 comprend également un moyen de blocage de la seconde masse inertielle 27 dans sa position active, les oscillations de la seconde masse inertielle 27 dues au choc, sont amorties.

Comme illustré aux figures 6a à 6c, le moyen de blocage comporte une lame élastique 35 sur laquelle se repose une saillie 37 de la seconde masse inertielle 27 en position de repos. Cette lame 35 est ici solidaire du socle 5 par l'une de ses extrémités, par exemple en étant vissée grâce à une vis 39 sur une paroi du socle 5. En variante, la lame 35 peut également être réalisée de manière intégrale avec le socle 5.

Cette lame 35 comporte un orifice d'accrochage 41 de la saille 37, en position active de la seconde masse inertielle 27. Dans la position de repos, la saillie 37 est en appui sur la lame 35 à proximité de l'orifice d'accrochage 41. Et lorsque la seconde masse inertielle 27 pivote, la saille 37 se déplace vers l'orifice d'accrochage 41 et s'y engage pour verrouiller la position active de la seconde masse inertielle 27.

Ainsi, en position de repos, lors d'une ouverture normale du levier de préhension 3, le levier de transmission 11 est entraîné en rotation et l'épaulement 23 ne touche pas l'ergot de blocage 21 de la première masse inertielle 17. De plus, la saillie 37 de la seconde masse inertielle 27 est en appui contre la lame 35 à proximité de l'orifice d'accrochage 41.

En cas de faible choc (faibles accélérations), la première masse inertielle 17 pivote autour du troisième axe de rotation B jusqu'à ce que l'ergot de blocage 21 de la première masse inertielle 17 coopère avec l'épaulement 23. Le levier de transmission 11 est alors immobilisé dans sa position de repos, de manière réversible.

De manière plus précise et comme illustré sur les figures 6a à 6c, lors d'un choc plus violent, la seconde masse inertielle 27 est accélérée selon une plus forte accélération et pivote autour du troisième axe de rotation B, surmontant la force du ressort 33, et la protubérance 31 de la première masse inertielle 17 s'engage dans l'ouverture 29 de la seconde masse inertielle 27. En même temps, dû au pivotement de la seconde masse inertielle 27, la saillie 37 de la seconde masse inertielle 27 glisse sur la lame 35 en direction de l'orifice d'accrochage 41 et vient s'accrocher dans ce dernier.

Dans cette position, la seconde masse inertielle 27 est bloquée et ne peut continuer à osciller ou revenir en position de repos. La seconde masse inertielle 27 verrouille donc de manière irréversible la première masse inertielle 17 empêchant efficacement tout déplacement du levier de transmission 11 et donc toute ouverture intempestive de la porte.

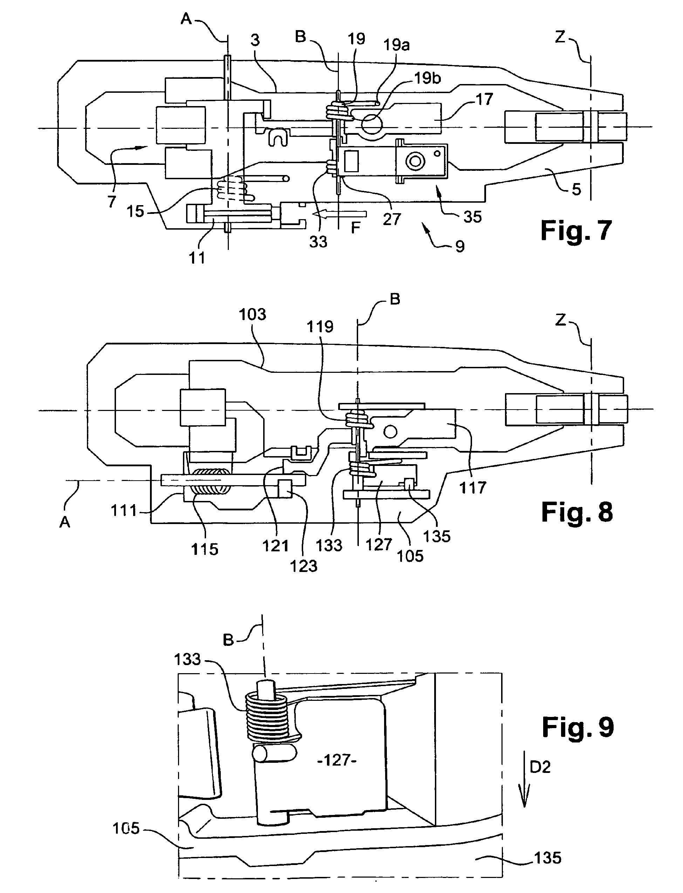

Le second mode de réalisation illustré sur la figure 7, diffère du premier mode de réalisation par le fait que le second axe de rotation A du levier de transmission 11 est sensiblement parallèle au premier axe de rotation Z, et non plus perpendiculaire.

Le fonctionnement du système de sécurité inertiel reste identique au premier mode de réalisation.

Un troisième mode de réalisation est illustré sur les figures 8 à 11. Sur ces figures, les éléments sensiblement identiques aux éléments des figures 2 à 7 portent les mêmes références précédées de la centaine 1.

Ce troisième mode de réalisation diffère du premier mode de réalisation par le fait que le moyen de blocage de la seconde masse inertielle 127 est réalisé par une cale de blocage 135. Cette cale 135 peut être fixée au socle 105 ou encore réalisée d'une seule pièce avec le socle 105.

Comme on le constate sur les figures, la cale 135 est disposée au niveau de la seconde masse inertielle 127, plus précisément en dessous d'une extrémité de la seconde masse inertielle 127.

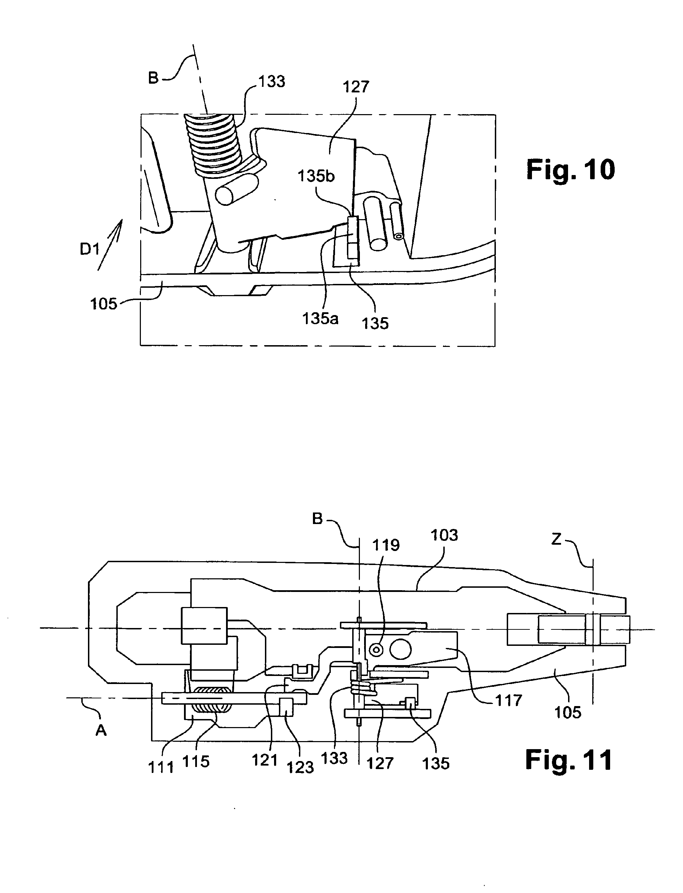

Cette cale 135 présente une forme générale sensiblement parallélépipédique avec une paroi longitudinale 135a en contact avec la seconde masse inertielle 127 en position de repos et une paroi latérale 135b en contact avec la seconde masse inertielle 127 en position active bloquée (voir figure 10).

Ainsi, en cas de choc, lorsque la seconde masse inertielle 127 tourne autour du troisième axe B, elle est également dirigée le long de la paroi longitudinale 135a de la cale 135 selon une première direction D1, puis la seconde masse inertielle 127 se déplace axialement par rapport au troisième axe B selon une deuxième direction D2 sensiblement perpendiculaire à la première direction D1.

En outre, le ressort de rappel 133 hélicoïdal, s'oppose au déplacement axial selon la deuxième direction D2, de la seconde masse inertielle 127 et est comprimé axialement lorsque la seconde masse inertielle 127 se déplace axialement. Ainsi, comme on le constate sur la figure 11, on peut prévoir selon une alternative un ressort de compression 119 uniquement pour la première masse inertielle 117, et un ressort hélicoïdal 133 pour la seconde masse inertielle 127.

En se référant à nouveau à la figure 10, lorsque la seconde masse inertielle 127 a franchi la cale 135 au cours de sa rotation, la seconde masse inertielle 127 est bloquée par la paroi latérale 135b de la cale 135 et ne peut plus tourner autour du troisième axe B.

Afin d'optimiser ce blocage, on peut prévoir que la seconde masse inertielle 127 comporte une dent qui s'engage dans un logement associé formé sur la paroi latérale de la cale, et inversement la cale 135 peut présenter une dent sur sa paroi latérale 135b qui engage dans un logement associé formé sur la seconde masse inertielle 127 (non représenté).

Un tel blocage de la seconde masse inertielle 127 à l'aide de la cale de blocage peut plus facilement être désactivé, en cas de blocage accidentel, par exemple, avant le montage de la poignée sur un véhicule. À titre d'exemple, un tournevis, peut être utilisé comme levier près de la cale 135 pour lever la seconde masse inertielle 127 par rapport à la cale 135 et la replacer en position de repos.

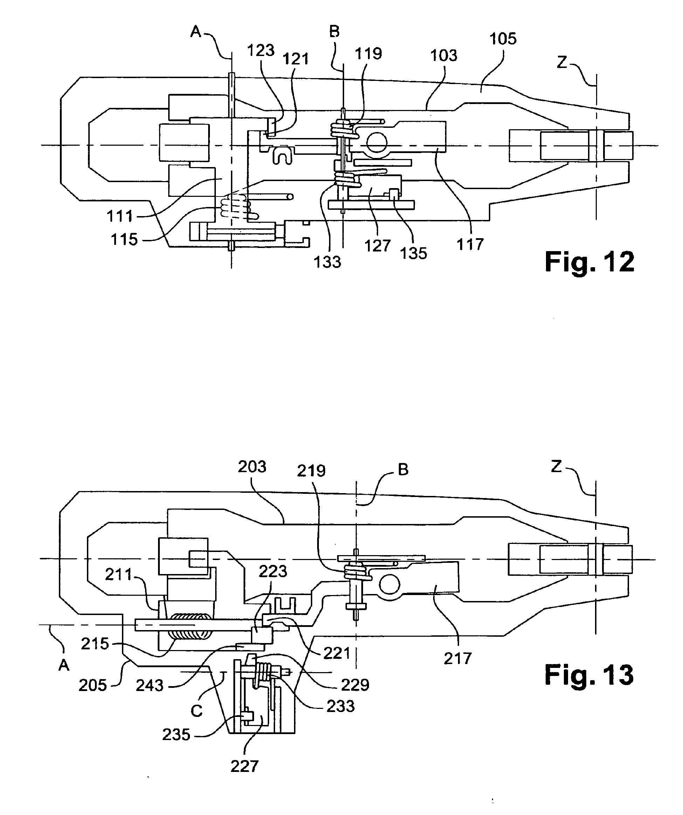

Le quatrième mode de réalisation illustré sur la figure 12, diffère du troisième mode de réalisation par le fait que le second axe de rotation A du levier de transmission 111 est sensiblement parallèle au premier axe de rotation Z, et non perpendiculaire.

Selon un cinquième mode de réalisation illustré sur les figures 13 à 15, la seconde masse inertielle agit directement sur le levier de transmission 11 et non plus par l'intermédiaire de la première masse inertielle.

Sur ces figures, les éléments sensiblement identiques aux éléments des figures 2 à 7 portent les mêmes références précédées de la centaine 2.

Selon ce cinquième mode de réalisation, la seconde masse inertielle 227 est montée à proximité du levier de transmission 211 et non plus de la première masse inertielle 217.

La seconde masse inertielle 227 est adaptée pour pivoter, par rapport au socle 205, autour d'un quatrième axe de rotation C qui n'est plus confondu avec le troisième axe de rotation B, entre une position de repos et une position active dans laquelle le levier de transmission 211 est bloqué en rotation. Selon ce cinquième mode de réalisation, le quatrième axe C est sensiblement perpendiculaire aux premier Z et troisième B axes de rotation.

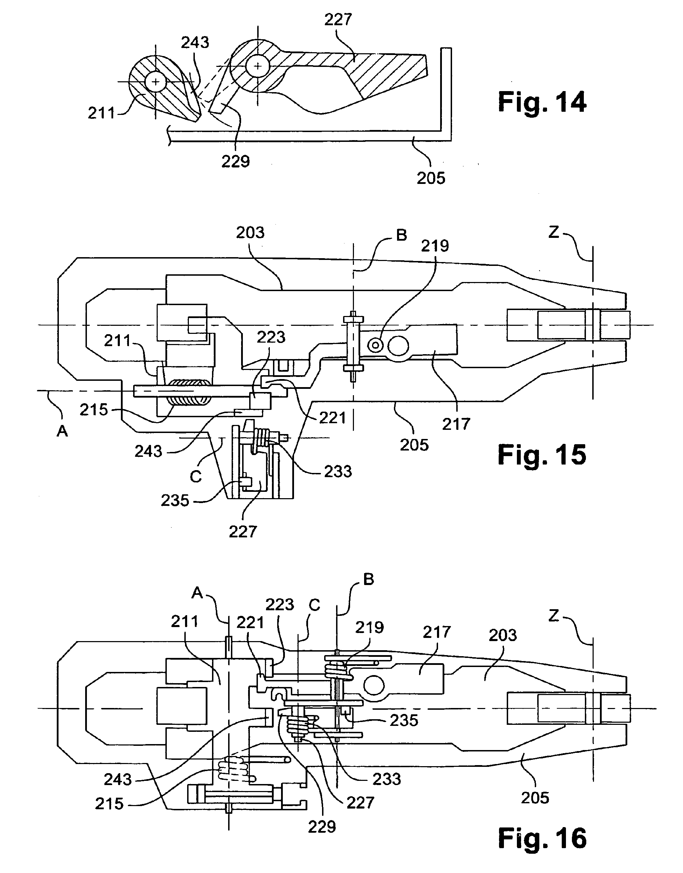

Comme on le constate sur la figure 14, la seconde masse inertielle 227 comporte un ergot de blocage 229 qui coopère avec un épaulement 243 du levier de transmission 211.

En outre, un ressort de rappel 233, par exemple de type hélicoïdal, permet de rappeler en position de repos la seconde masse inertielle 227 (figure 13).

Le ressort hélicoïdal 233 est ici centré sur le quatrième axe de rotation C avec une extrémité en contact avec un support du socle 205 et l'autre extrémité en contact avec la seconde masse inertielle 227.

Ainsi, dans le cas d'un choc violent, la seconde masse inertielle 227 pivote, surmontant la force du ressort 233. Ceci entraîne que l'ergot de blocage 229 est déplacé jusqu'à intercepter l'épaulement 243 et verrouiller levier de transmission 211 au début de la rotation du levier de transmission 211.

Bien entendu, pour le blocage de la seconde masse inertielle en position active, on peut prévoir une lame élastique telle que décrit dans le premier mode de réalisation, ou en alternative une cale de blocage 235, telle que décrite dans le troisième mode de réalisation (figure 13).

La figure 15 illustre une variante de réalisation de ce cinquième mode de réalisation dans lequel on utilise un ressort de compression 219 pour la première masse inertielle 217.

Le sixième mode de réalisation illustré sur la figure 16, diffère du cinquième mode de réalisation par le fait que le second axe de rotation A du levier de transmission 211 est sensiblement parallèle au premier axe de rotation Z, et non perpendiculaire. De même, le quatrième axe de rotation C est parallèle au troisième axe de rotation B et donc au premier axe de rotation Z.

Dans ce cas, comme on le remarque sur la figure 16, la seconde masse inertielle 227 est également à proximité de la première masse inertielle 217.

De plus, le levier de transmission 211 comporte deux branches parallèles s'étendant respectivement vers la première 217 et la seconde 227 masses inertielles. Chaque branche présente un épaulement 223,243 pour coopérer avec la première 217 et la seconde 227 masse inertielle.

On comprend donc qu'un tel système de sécurité 9 avec une première masse inertielle activée pour les faibles accélérations et une seconde masse inertielle activée pour les fortes accélérations, permet d'empêcher toute ouverture intempestive de la porte quelle que soit l'accélération du choc.

En outre, ce système de sécurité permet de bloquer de manière réversible le levier de transmission ou tout autre élément de la cinématique d'ouverture d'un ouvrant, en cas de chocs à faibles accélérations grâce à la première masse inertielle, ce qui évite que la poignée soit totalement bloquée, tout en assurant un blocage irréversible directement ou indirectement du levier de transmission grâce à la seconde masse inertielle, en cas d'accélérations plus élevées.

## Revendications

1. Poignée d'un ouvrant de véhicule automobile comprenant :
- un levier de préhension (3,103,203) mobile en rotation par rapport à l'ouvrant autour d'un premier axe de rotation (Z) entre une position de repos et une position de commande pour l'ouverture d'une serrure de l'ouvrant,
- un levier de transmission (11,111,211) monté dans un socle (5,105,205) de la poignée fixé à l'ouvrant, le levier de transmission (11,111,211) étant configuré pour être actionné par le levier de préhension (3,103,203) et pivoter autour d'un second axe de rotation (A) entre une position de repos et une position active dans laquelle le levier de transmission (11,111,211) actionne l'ouverture de la serrure, et
- un système de sécurité (9) monté dans le socle (5,105,205), configuré pour empêcher la rotation du levier de transmission (11,111,211) en cas de choc,
**caractérisée en ce que** le système de sécurité (9) comporte deux masses inertielles (17,117,217) et (27,127,227), montées pivotantes entre une position de repos et une position active empêchant la rotation du levier de transmission (11,111,211), dont une première desdites masses inertielles (17,117,217) se bloque en position active de manière réversible et une seconde desdites masses inertielles (27,127,227) se bloque en position active, de manière irréversible.

2. Poignée selon la revendication 1, **caractérisée en ce que** le système de sécurité (9) comporte un moyen de blocage (35,135,235) de la seconde masse inertielle (27,127,227) en position active, pour bloquer en rotation le levier de transmission de manière irréversible.

3. Poignée selon la revendication 1, **caractérisée en ce que** la première masse inertielle (17,117,217) comporte un ergot de blocage (21,121,221) qui coopère avec un premier épaulement (23,123,223) du levier de transmission (11,111,211), pour bloquer en rotation le levier de transmission (11,111,211) en cas de choc.

4. Poignée selon la revendication 1 ou 2, **caractérisée en ce que** la seconde masse inertielle (227) comporte un ergot de blocage (229) qui coopère avec un second épaulement (243) du levier de transmission (211), pour bloquer directement en rotation le levier de transmission (211) en cas de choc.

5. Poignée selon l'une des revendications 1 à 3, **caractérisée en ce que** la seconde masse inertielle (27,127) est configurée pour bloquer le levier de transmission (211) par l'intermédiaire du blocage de la première masse inertielle (17,117) en position active.

6. Poignée selon la revendication 5, **caractérisée en ce que** la seconde masse inertielle (27,127) présente une ouverture (29) pour recevoir une protubérance (31) de la première masse inertielle (17,117) en position active.

7. Poignée selon l'une quelconque des revendications précédentes, **caractérisée en ce que** le moyen de blocage de la seconde masse inertielle (27) comporte une lame souple (35) coopérant avec une saillie (37) de la seconde masse inertielle (27).

8. Poignée selon l'une quelconque des revendications 1 à 6, **caractérisée en ce que** le moyen de blocage de la seconde masse inertielle (127) comporte une cale de blocage (135) de forme générale sensiblement parallélépipédique, disposée sur le socle (105) en regard d'une extrémité de la seconde masse inertielle (127), de sorte que lorsque la seconde masse inertielle (127) pivote, la seconde masse inertielle (127) :
- coulisse le long d'une paroi longitudinale (135a) de la cale de blocage (135) selon une première direction (D1), puis
- coulisse le long d'une paroi latérale (135b) de la cale de blocage (135) selon une deuxième direction (D2) sensiblement perpendiculaire à la première direction (D1), ladite paroi latérale (135b) formant une butée bloquant la seconde masse inertielle (127) en position active.

9. Poignée selon l'une quelconque des revendications 1 à 8, **caractérisée en ce que** le second axe de rotation (A) est sensiblement perpendiculaire au premier axe de rotation (Z).

10. Poignée selon l'une quelconque des revendications 1 à 8, **caractérisée en ce que** le second axe de rotation (A) est sensiblement parallèle au premier axe de rotation (Z).

## Claims

1. Handle for a door leaf of an automobile comprising:
- a gripping lever (3, 103, 203) which is mobile in rotation relative to the door leaf about a first axis of rotation (Z) between an inoperative position and a control position for opening a lock of the door leaf,
- a transmission lever (11, 111, 211) mounted in a base (5, 105, 205) of the handle fixed to the door leaf, the transmission lever (11, 111, 211) being configured so as to be actuated by the gripping lever (3, 103, 203) and to pivot about a second axis of rotation (A) between an inoperative position and an operative position in which the transmission lever (11, 111, 211) actuates the opening of the lock, and
- a safety system (9) mounted in the base (5, 105, 205), configured to prevent the rotation of the transmission lever (11, 111, 211) in the event of a collision,
**characterized in that** the safety system (9) comprises two inertial bodies (17, 117, 217) and (27, 127, 227), pivotably mounted between an inoperative position and an operative position, preventing the rotation of the transmission lever (11, 111, 211), the first (17, 117, 217) of said inertial bodies being locked in the operative position in a reversible manner and the second (27, 127, 227) of said inertial bodies being locked in the operative position in a non-reversible manner.

2. Handle according to Claim 1, **characterized in that** the safety system (9) comprises a means (35, 135, 235) for locking the second inertial body (27, 127, 227) in the operative position to lock the transmission lever in rotation, in a non-reversible manner.

3. Handle according to Claim 1, **characterized in that** the first inertial body (17, 117, 217) comprises a locking lug (21, 121, 221) which cooperates with a first shoulder (23, 123, 223) of the transmission lever (11, 111, 211) to lock the transmission lever (11, 111, 211) in rotation in the event of a collision.

4. Handle according to Claim 1 or 2, **characterized in that** the second inertial body (227) comprises a locking lug (229) which cooperates with a second shoulder (243) of the transmission lever (211) to lock the transmission lever (211) in rotation, in a direct manner, in the event of a collision.

5. Handle according to one of Claims 1 to 3, **characterized in that** the second inertial body (27, 127) is configured to lock the transmission lever (211) by locking the first inertial body (17, 117) in the active position.

6. Handle according to Claim 5, **characterized in that** the second inertial body (27, 127) has an opening (29) to receive a protuberance (31) of the first inertial body (17, 117) in the operative position.

7. Handle according to any one of the preceding claims, **characterized in that** the locking means of the second inertial body (27) comprises a flexible strip (35) cooperating with a projection (37) of the second inertial body (27).

8. Handle according to any one of Claims 1 to 6, **characterized in that** the locking means of the second inertial body (127) comprises a locking wedge (135) of substantially parallelepiped overall shape, arranged on the base (105) opposite one end of the second inertial body (127), such that when the second inertial body (127) pivots, the second inertial body (127):
- slides along a longitudinal wall (135a) of the locking wedge (135) in a first direction (D1), then
- slides along a side wall (135b) of the locking wedge (135) in a second direction (D2) substantially perpendicular to the first direction (D1), said side wall (135b) forming a stop locking the second inertial body (127) in the operative position.

9. Handle according to any one of Claims 1 to 8, **characterized in that** the second axis of rotation (A) is substantially perpendicular to the first axis of rotation (Z).

10. Handle according to any one of Claims 1 to 8, **characterized in that** the second axis of rotation (A) is substantially parallel to the first axis of rotation (Z).

## Patentansprüche

1. Handgriff eines Türblatts eines Kraftfahrzeugs, aufweisend:
- einen Greifhebel (3, 103, 203), der in Drehung in Bezug zu dem Türblatt um eine erste Rotationsachse (Z) zwischen einer Ruhestellung und einer Steuerstellung für das Öffnen eines Schlosses des Türblatts beweglich ist,
- einen Übertragungshebel (11, 111, 211), der in einen Sockel (5, 105, 205) des Handgriffs, der an dem Türblatt befestigt ist, montiert ist, wobei der Übertragungshebel (11, 111, 211) konfiguriert ist, von dem Greifhebel (3, 103, 203) betätigt zu werden und um eine zweite Rotationsachse (A) zwischen einer Ruhestellung und einer aktiven Stellung geschwenkt zu werden, in der der Übertragungshebel (11, 111, 211) das Öffnen des Schlosses betätigt, und
- ein Sicherheitssystem (9), das in den Sockel (5, 105, 205) montiert ist, das konfiguriert ist, die Drehung des Übertragungshebels (11, 111, 211) bei einem Stoß zu verhindern,
**dadurch gekennzeichnet, dass** das Sicherheitssystem (9) zwei Trägheitsmassen (17, 117, 217) und (27, 127, 227) aufweist, die schwenkend zwischen einer Ruhestellung und einer aktiven Stellung, die das Drehen des Übertragungshebels (11, 111, 211) verhindert, montiert sind, wovon sich eine erste der Trägheitsmassen (17, 117, 217) in aktiver Stellung umkehrbar blockiert und sich eine zweite der Trägheitsmassen (27, 127, 227) in aktiver Position nicht umkehrbar blockiert.

2. Handgriff nach Anspruch 1, **dadurch gekennzeichnet, dass** das Sicherheitssystem (9) ein Blockierungsmittel (35, 135, 235) der zweiten Trägheitsmasse (27, 127, 227) in aktiver Position aufweist, um den Übertragungshebel in Drehung nicht umkehrbar zu blockieren.

3. Handgriff nach Anspruch 1, **dadurch gekennzeichnet, dass** die erste Trägheitsmasse (17, 117, 217) einen Blockierungsdorn (21, 121, 221) aufweist, der mit einem ersten Ansatz (23, 123, 223) des Übertragungshebels (11, 111, 211) zusammenwirkt, um den Übertragungshebel (11, 111, 211) bei einem Stoß in Drehung zu blockieren.

4. Handgriff nach Anspruch 1 oder 2, **dadurch gekennzeichnet, dass** die zweite Trägheitsmasse (227) einen Blockierungsdorn (229) aufweist, der mit einem zweiten Ansatz (243) des Übertragungshebels (211) zusammenwirkt, um bei einem Stoß den Übertragungshebel (211) direkt in Drehung zu blockieren.

5. Handgriff nach einem der Ansprüche 1 bis 3, **dadurch gekennzeichnet, dass** die zweite Trägheitsmasse (27, 127) konfiguriert ist, den Übertragungshebel (211) über die Blockierung der ersten Trägheitsmasse (17, 117) in aktiver Position zu blockieren.

6. Handgriff nach Anspruch 5, **dadurch gekennzeichnet, dass** die zweite Trägheitsmasse (27, 127) eine Öffnung (29) aufweist, um einen Vorsprung (31) der ersten Trägheitsmasse (17, 117) in aktiver Position aufzunehmen.

7. Handgriff nach einem der vorhergehenden Ansprüche, **dadurch gekennzeichnet, dass** das Blockierungsmittel der zweiten Trägheitsmasse (27) eine biegsame Klinge (35) aufweist, die mit einem Vorsprung (37) der zweiten Trägheitsmasse (27) zusammenwirkt.

8. Handgriff nach einem der Ansprüche 1 bis 6, **dadurch gekennzeichnet, dass** das Blockierungsmittel der zweiten Trägheitsmasse (127) einen Blockierungskeil (135) mit allgemein im Wesentlichen parallelepipedischer Form aufweist, der auf dem Sockel (105) gegenüber einem Ende der zweiten Trägheitsmasse (127) derart angeordnet ist, dass, wenn die zweite Trägheitsmasse (127) schwenkt, die zweite Trägheitsmasse (127):
- entlang einer Längswand (135a) des Blockierungskeils (135) entlang einer ersten Richtung (D1) gleitet, dann
- entlang einer seitlichen Wand (135b) des Blockierungskeils (135) entlang einer zweiten Richtung (D2) im Wesentlichen senkrecht zu der ersten Richtung (D1) gleitet, wobei die seitliche Wand (135b) einen Anschlag bildet, der die zweite Trägheitsmasse (127) in aktiver Position blockiert.

9. Handgriff nach einem der Ansprüche 1 bis 8, **dadurch gekennzeichnet, dass** die zweite Rotationsachse (A) zu der ersten Rotationsachse (Z) im Wesentlichen senkrecht ist.

10. Handgriff nach einem der Ansprüche 1 bis 8, **dadurch gekennzeichnet, dass** die zweite Rotationsachse (A) zu der ersten Rotationsachse (Z) im Wesentlichen parallel ist.
